# EUROPEAN PATENT SPECIFICATION

(11) **EP 3 812 321 B1**
(45) Date of publication and mention of the grant of the patent: **06.12.2023**
(21) Application number: 20075012.3
(22) Date of filing: 19.10.2020
(51) Int. Cl.: B65G 59/06

(54) **APPARATUS FOR THE DESTACKING OF A SLICED BREAD INTO SEPARATE SLICES**
VORRICHTUNG ZUM ENTSTAPELN EINES GESCHNITTENEN BROTS IN GETRENNTE SCHEIBEN
APPAREIL PERMETTANT DE DÉSEMPILER UN PAIN TRANCHÉ EN TRANCHES SÉPARÉES

(30) Priority: 21.10.2019 NL 1043435
(43) Date of publication of application: 28.04.2021
(73) Proprietor: Dero Groep Joure BV, 8502 VC Joure (NL)
(72) Inventor: Rusticus, Robert Christiaan, 9251 KN Burgum (NL)
(74) Representative: Koomen, M.J.I.

(56) References cited:
- FR-A1- 2 733 202
- GB-A- 2 216 508
- GB-A- 2 271 541
- GB-A- 2 296 914

## Description

The present invention relates to an apparatus for the destacking of a sliced bread into separate slices.

Such an apparatus is known.

In the automatic production of sandwiches at the start of a production line sliced breads are destacked or singled into separate slices.

By means of the known apparatuses, also referred to as bread destackers, most types of bread can be destacked well. There are however some types of bread where the single slices are difficult to separate from each other. Like this there is a type of bread whereby the fibres of the bread cause the slices of bread to get "stuck" together. Another type of bread that is difficult to un stack is a soft and limp bread. When one tries to slide a slice along another slice, then the friction between the two slices will complicate the sliding. In practice it is seen that the carrier "squeezes together" the slice that is to be destacked and thus damages the slice that is to be destacked, and this often is not destacked.

An apparatus that is used in the market comprises a conveying means in the form of a vertically arranged disc, that is rotatable around a horizontal rotation axis, with a circumference that is provided round about with at least one slice seat, intended for taking up a separate slice, formed by a supporting surface for the sideways support of a side face of the slice and a carrier in the form of an edge or ledge that connects right-angled to the supporting surface, for the supporting of an edge of the slice, which slice seat during a rotating of the disc can travel a route between a supply storage for the supply of sliced breads and a discharge belt for the discharge of the separate bread slices, whereby the supply storage comprises a placement surface with an output outer end, that is situated substantially sideways of the circumference, and which output outer end is intended to convey from out there a frontmost slice from a bread that is present on the output outer end onto the slice seat, whereby the output outer end is positionable in a starting position, relative to the slice seat in such a way, that the side face of the frontmost slice that is directed towards the supporting surface is parallel to the plane of the supporting surface, whereby a provision is present by means of which the bread that is present at the output outer end can be moved or pushed in the direction of the supporting surface, such that the frontmost slice, from out of the output outer end, ends up or is pushed onto the carrier with an edge on the carrier and with the side face against the supporting surface, whereby means are provided by which it can be achieved that, during a rotating of the disc, the slice that is destacked and conveyed onto the slice seat, becomes loose or free from a frontmost, not yet destacked, slice of the bread that is present on the output outer end.

GB 2 271 541 A discloses an apparatus with a rotatable disc provided with seats onto which can be placed a flat item, for instance a biscuit, from out of a feet chute. The feet chute has two walls by means of which the biscuits are fed to a conveyor unit. This publication comprises a provision for regulating the number of items that are taken along, whereby a seat can be partially turned aside so that this does not take an item along. GB 2 271 541 A discloses an apparatus for destacking of a sliced bread into separate slices according to the preamble of claim 1.

The publication FR 2 733 202 A discloses an apparatus whereby a seat is provided with a supporting surface for a side edge of a slice, which supporting surface can be moved into two positions, such that this can take up a slice and push this slice out again.

The publication GB 2 296 914 A discloses a rotatable belt provided with seats and with vertically above that a supply storage for the bread slices being provided. During the rotation the edge of a seat takes along a slice from out of the storage. The next slice that is still present in the storage is held, during the further rotation, upwards in the storage by the surface of a next seat, whereby this next seat eventually takes this next slice along.

With these known apparatuses a frontmost slice is separated from the remainder of the bread. The bread slice hereby slides along the other slices. This apparatus only suffices when the slices are well loose relative to each other, and the fibres of the slices do not get caught into each other.

It is an object of the present invention to provide an apparatus by means of which also those bread slices can be separated from the remainder of a sliced bread, of which the fibres of the slices tend to get caught into each other and to stick together, or of which the slices due to a softness or limpness of the bread, are difficult to destack.

The apparatus according to the invention to that end is characterized, in that the means are formed in that the output outer end from out of the starting position is movable upwards into a release position, such that along with the movement upwards a space is created in between the side face of a frontmost slice of the bread that is present on the output outer end, and the side face, that is directed towards this side face, of the, already destacked, slice transferred onto the carrier.

According to another characteristic of the apparatus according to the invention the output outer end is movable upwards from out of the starting position into the release position at a speed that is equal to the rotation speed of the disc.

According to another characteristic of the apparatus according to the invention at the output outer end a retaining means is provided by means of which the bread, with the exception of the frontmost slice, can be retained and be released again.

According to a further characteristic of the apparatus according to the invention the retaining means is formed by a pair of retaining arms that are provided on both sides of the placement surface, which are movable in a horizontal direction towards each other and away from each other, such, that when these are moved towards each other, by means thereof a sliced bread, with the exception of the frontmost slice, can be retained on the placement surface.

Further characteristics and particulars will be described with reference to the drawings of an example of an embodiment of the apparatus according to the invention.

The figures 1, 2 and 3 all show a perspective view of the apparatus according to the invention.

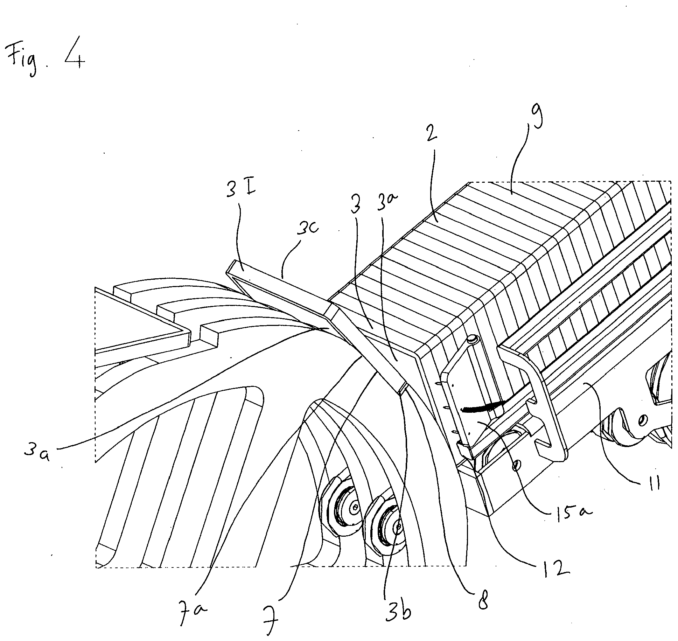

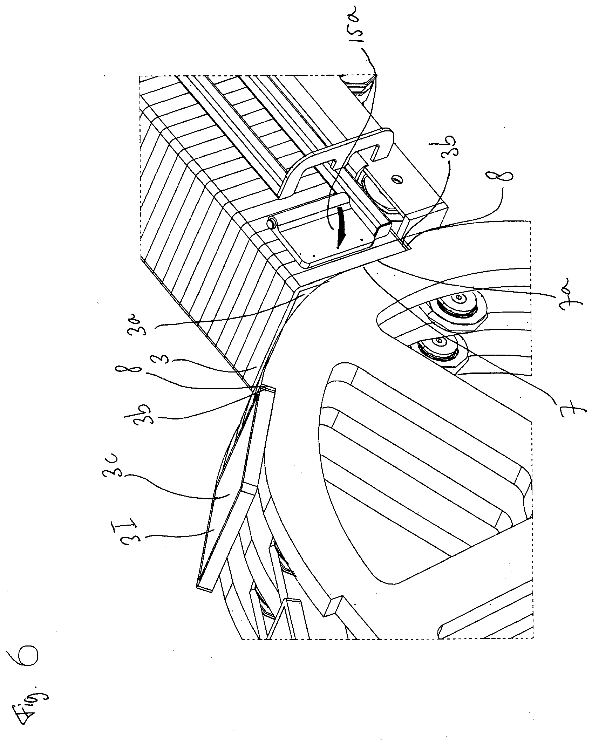

The figures 4, 5 and 6 show a detail of the apparatus according to the invention shown in the figures 1 to 3.

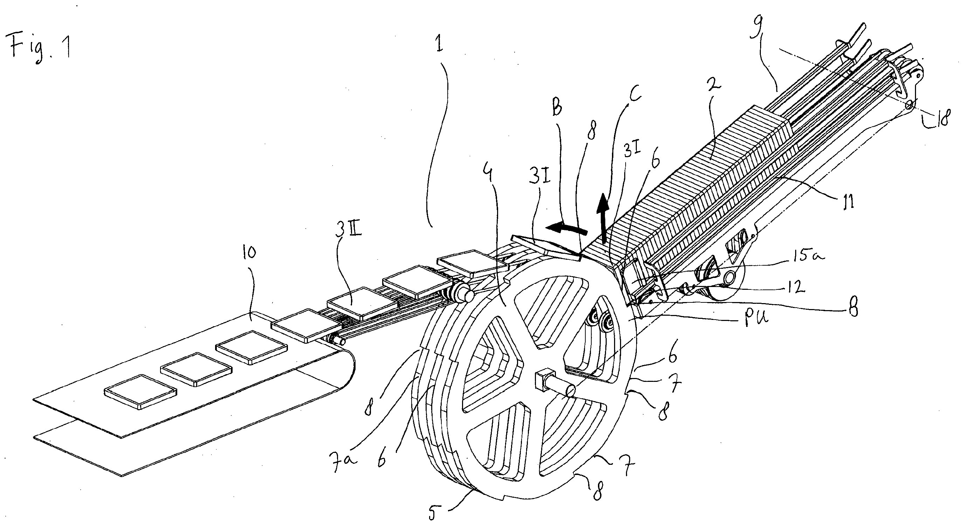

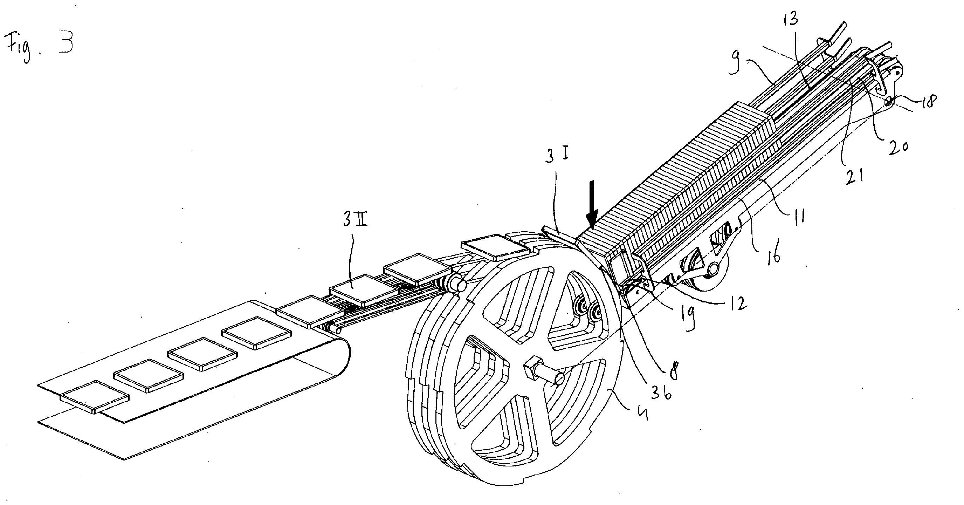

As can be seen in the figures 1, 2 and 3, the apparatus 1 for the destacking of a sliced bread 2 into separate slices 3 comprises a conveying means in the form of a vertically arranged disc 4, that is rotatable around an horizontal rotation axis, with a circumference 5 that is provided round about with, in this example of an embodiment, a number of slice seats 6, which each are intended for taking up one separate bread slice 3. The slice seat 6 consists of a supporting surface 7 formed onto the circumference of the disc for the sideways support of a side face 3a of a slice 3, and a carrier 8 in the form of an edge 8 or ledge 8 that connects right-angled to the supporting surface 7, for the supporting of an edge 3b of the slice 3. As can be seen in the figures 1, 2 and 3, the slice seat 6 during a rotating of the disc 4 can travel a route between a supply storage 9 for the supply of sliced breads 2 and a discharge belt 10, such as a rope belt, for the discharge of the already destacked bread slices 311.

The supply storage 9 comprises a placement surface 11 with an output outer end 12.

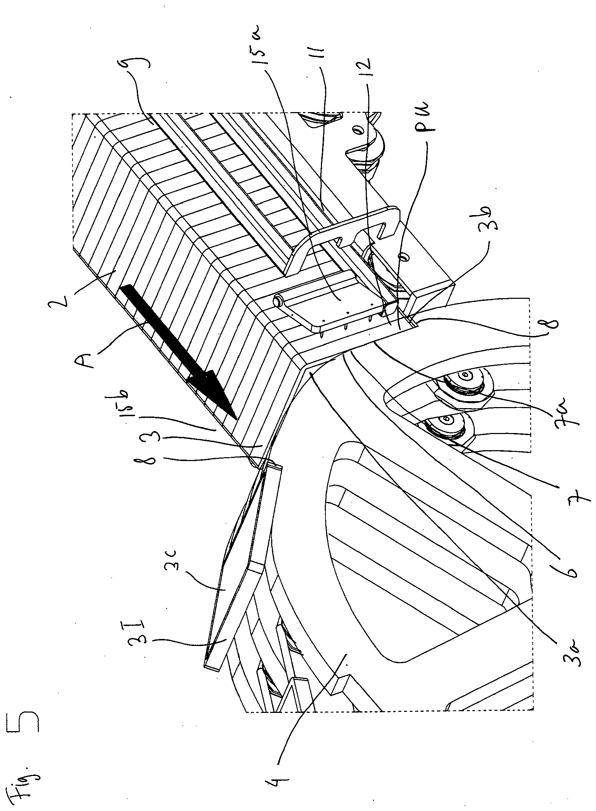

In the starting position PU, shown in figure 1 and figure 5, the supply storage 9 is situated or placed such, that the output outer end 12 is provided at a height substantially sideways of the circumference 5 of the disc 4. The apparatus is provided with control means for making the disc 4 rotate. In case of a bread type that is more or less difficult to un stack it will be opted for to have the disc 4 rotate in such a way, that the rotating of the disc can be stopped for a time period every time at the moment that a carrier takes in a position in which it finds itself more or less in the same plane as the bottom side of a bread 2 that is present on the output outer end 12, at the moment that this output outer end finds itself in the starting position PU. When it concerns a bread type that is not difficult to destack, it will be opted for to have the disc 4 continue rotating during the conveying of the frontmost slice to the slice seat 6. In the starting position PU shown in the figures 1, 3 and 5 the output outer end 12 further is positioned relative to the slice seat 6 in such a way, that the side face 3a of a frontmost slice 3 of a bread 2 present on the output outer end 12 that is directed towards the supporting surface 7 is substantially parallel to the plane 7a of the supporting surface 7. The conveying thereafter of this frontmost slice 3 from out of the output outer end 12 onto a slice seat 6 takes place as follows.

By driving of the thrusters 13 provided on to the supporting surface 11, the bread 2 that is present on the output outer end 12 is moved or pushed in the direction according to the arrow A (figure 5) of the supporting surface 7 on the disc 4, along a distance equal to the thickness of a slice. This is done in such a way, that the frontmost slice 3, that is to be destacked, from out of the output outer end 12 ends up or is pushed onto the slice seat 6 with an edge 3b resting on the carrier 8 and with the side face 3a against the surface 7a of the supporting surface 7 (figure 5).

On both sides of the placement surface a pair of retaining arms 15a, 15b is provided which are movable in a horizontal direction towards each other and away from each other. The retaining arms 15a, 15b are moved towards each other, by means of which the bread 2, with the exception of the frontmost slice 3, that is to be destacked, can be retained on the placement surface 11.

Meanwhile the disc 4 rotates further, or, when the rotating of the disc 4 has been stopped for a time period (in the case of a bread type that is more difficult to destack), will rotate anew and further while taking along, in the direction of the arrow B and as can be seen in figure 1, the slice 31, that has been conveyed onto the slice seat 6 and has now been destacked.

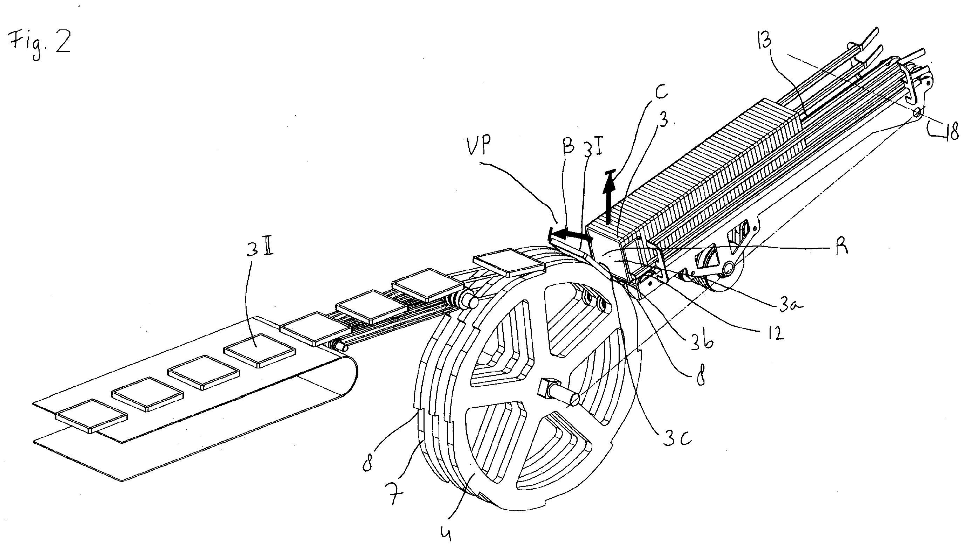

Simultaneously with this further rotating, as can be seen in figure 2, the output outer end 12 moves from out of the starting position along a certain distance according to the arrow C in a direction upwards to a release postion VP, during which movement upwards a space R is created between the side face 3a of a new frontmost slice 3 of the bread 2 present on the output outer end 12 and the side face 3c, that is directed towards this side face 3a, of the slice 31 that has been conveyed on to the carrier, so that this last slice 31 can come loose from this now frontmost slice 3 of the bread 12 still present on the output outer end 12 (figure 2).

Preferably the speed at which the output outer end 12 is movable upwards from out of the starting position into the release position is equal to the speed at which the disc 4 rotates.

By the, during a short time, moving along upwards of the output outer end 12 of the storage 9 at a speed that is the same as that of the disc 4 a space R is created between the side face 3a of a frontmost slice 3 of the bread 2 present on the output outer end 12 and the side face 3b, that is directed towards this side face 3a, of the slice 31 that has been conveyed on to the slice seat 6. The slice 31 that has been transferred to the slice seat 6 now no longer has to slide along the front slice 3 of the bread present on the output outer end 12, but has room to fall loose. Should the slice 31 that has been transferred to the slice seat 6 nevertheless stick to the frontmost slice 3 of the bread that is still present on the output outer end 12, then the carrier 8 will push the slice 31 loose and the slice will then as yet be carried along by the disc.

In the example of an embodiment shown the placement surface 11 of the supply storage 9 has the shape of an elongated tray or trough 16 having an outer end 19 that forms an output outer end 12 and an opposite outer end 20 that forms an input outer end 21 for the input into the supply storage 9 of sliced breads 2. The supply storage 9 is hingedly suspended in a not further shown construction by means of an axis 18 provided at the input outer end 21.

With an up and down movement of the outer end 19 this output outer end 12 is movable from the starting position to the release position.

## Claims

1. Apparatus (1) for the destacking of a sliced bread (2) into separate slices (3), comprising:
a conveying means in the form of a vertically arranged disc (4), that is rotatable around a horizontal rotation axis, with a circumference (5) that is provided round about with at least one slice seat (6), intended for taking up a separate slice (3), formed by a supporting surface (7) for the sideways support of a side face (3a) of the slice (3) and a carrier (8) in the form of an edge (8) or ledge (8) that connects right-angled to the supporting surface (7), for the supporting of an edge (3b) of the slice (3), which slice seat (6) during a rotating of the disc (4) can travel a route between a supply storage (9) for the supply of sliced breads (2) and a discharge belt (10) for the discharge of separate already destacked bread slices (3II), whereby the supply storage (9) comprises a placement surface (11) with an output outer end (12), that is situated substantially sideways of the circumference (5), and which output outer end (12) is intended to convey from out there a frontmost slice (3) from a bread (2) that is present on the output outer end (12) onto the slice seat (6), whereby the output outer end (12) is positionable in a starting position (PU), relative to the slice seat (6) in such a way, that the side face (3a) of the frontmost slice (3) that is directed towards the supporting surface (7) is parallel to the plane (7a) of the supporting surface (7), whereby a provision is present by means of which the bread (2) that is present at the output outer end (12) can be moved or pushed in the direction of the supporting surface (7) such that the frontmost slice (3), from out of the output outer end (12), ends up or is pushed onto the slice seat (6) with an edge (3b) resting on the carrier (8) and with the side face (3a) against the supporting surface (7) , whereby means are provided by which it can be achieved that, during a rotating of the disc (4), the slice (3I) that is destacked and conveyed onto the slice seat (6), becomes loose or free from a frontmost, not yet destacked, slice (3) from the bread (2) that is present on the output outer end (12), **characterized in that** the means are formed **in that** the output outer end (12) from out of the starting position (PU) is movable upwards into a release position (VP), such that along with the movement upwards a space (R) is created in between the side face (3a) of a front slice (3) of the bread (2) that is present on the output outer end (12), and the side face (3b), that is directed towards this side face (3a), of the, already destacked, slice (3I) conveyed onto the carrier.

2. Apparatus according to claim 1, **characterized in that** the output outer end (12) is movable upwards from out of the starting position (PU) into the release position (VP) at a speed that is equal to the rotation speed of the disc (4).

3. Apparatus according to claim 1 or 2, **characterized in that** the placement surface (11) has the shape of an elongated tray or trough (16) having an outer end (19) that forms an output outer end (12) and an opposite outer end (20) that forms an input outer end (21), for the input into the supply storage (9) of sliced breads (2), which tray or trough (16) is hingedly suspended by means of an axis (18) provided at the input outer end (21), whereby, with an up and down movement of the output outer end (12) this output outer end (12) is movable from the starting position (PU) to the release position (VP).

4. Apparatus according to one of the preceding claims, **characterized in that** in the output outer end (12) a retaining means is provided by means of which the bread (2), with the exception of the frontmost slice (3), can be retained and be released again.

5. Apparatus according to claim 4, **characterized in that** the retaining means is formed by a pair of retaining arms (15a, 15b) that are provided on both sides of the placement surface (11), which are movable in a horizontal direction towards each other and away from each other, such, that when these are moved towards each other, by means thereof a sliced bread (2), with the exception of the frontmost slice (3), can be retained on the placement surface (11).

## Patentansprüche

1. Vorrichtung (1) zum Entstapeln von geschnittenem Brot (2) in einzelne Scheiben (3) aufweisend:
- ein Fördermittel in Form einer vertikal angeordneten Radscheibe (4), die um eine horizontale Drehachse drehbar ist, und mit einem Umfang (5), der rundum mit mindestens einem Scheibensitz (6) versehen ist, der zur Aufnahme einer einzelnen Scheibe (3) bestimmt ist, und durch eine Auflagefläche (7) zur seitlichen Abstützung einer Seitenfläche (3a) der Scheibe (3) und einem Träger (8) in Form einer Kante (8) oder Leiste (8), die rechtwinklig an die Auflagefläche (7) anschließt, um eine Kante (3b) der Scheibe (3) abzustützen, gebildet ist,
- wobei der Scheibensitz (6) während einer Drehung der Radscheibe (4) eine Strecke zwischen einem Vorratsspeicher (9) für die Zufuhr von geschnittenem Brot (2) und einem Entladeband (10) für die Entladung von einzelnen, bereits entstapelten Brotscheiben (311) zurücklegen kann,
- wobei der Vorratsspeicher (9) eine Ablagefläche (11) mit einem Ausgabeaußenende (12) aufweist, das sich im Wesentlichen seitlich des Umfangs (5) befindet, und
- wobei das Ausgabeaußenende (12) dazu bestimmt ist, von dort eine vorderste Scheibe (3) von einem Brot (2), das sich auf dem Ausgabeaußenende (12) befindet, auf den Scheibensitz (6) zu befördern,
- wobei das Ausgabeaußenende (12) in einer Ausgangsposition (PU) relativ zu dem Scheibensitz (6) derart positionierbar ist, dass die der Auflagefläche (7) zugewandte Seitenfläche (3a) der vordersten Scheibe (3) parallel zur Ebene (7a) der Auflagefläche (7) verläuft,
- wobei eine Einrichtung vorhanden ist, mittels der das am Ausgabeaußenende (12) befindliche Brot (2) in Richtung der Auflagefläche (7) bewegt oder geschoben werden kann, so dass die vorderste Scheibe (3) aus dem Ausgabeaußenende (12) heraus mit einer Kante (3b) auf dem Träger (8) aufliegend und mit der Seitenfläche (3a) gegen die Auflagefläche (7) auf den Scheibensitz (6) gelangt oder geschoben wird,
- wobei Mittel vorgesehen sind, mit denen erreicht werden kann, dass bei einer Drehung der Radscheibe (4) die Scheibe (31), die entstapelt und auf den Scheibensitz (6) befördert wird, sich von einer vordersten, noch nicht entstapelten Scheibe (3) des Brotes (2), die am Ausgabeaußenende (12) vorhanden ist, löst oder frei wird,
**dadurch gekennzeichnet,**
- **dass** die Mittel so ausgebildet sind, dass das Ausgabeaußenende (12) aus der Ausgangsposition (PU) nach oben in eine Freigabeposition (VP) bewegbar ist, so dass zusammen mit der Bewegung nach oben ein Raum (R) zwischen der Seitenfläche (3a) einer vorderen Scheibe (3) des Brotes (2), die an dem Ausgabeaußenende (12) vorhanden ist, und der Seitenfläche (3b), die zu dieser Seitenfläche (3a) der bereits entstapelten Scheibe (31), die auf den Träger befördert wird, gerichtet ist, geschaffen wird.

2. Vorrichtung (1) nach Anspruch 1, **dadurch gekennzeichnet, dass** das Ausgabeaußenende (12) mit einer Geschwindigkeit, die gleich der Drehgeschwindigkeit der Radscheibe (4) ist, aus der Ausgangsposition (PU) nach oben in die Freigabeposition (VP) bewegbar ist.

3. Vorrichtung nach Anspruch 1 oder 2, **dadurch gekennzeichnet, dass** die Ablagefläche (11) die Form einer länglichen Schale oder eines Trogs (16) mit einem äußeren Ende (19), das ein Ausgabeaußenende (12) bildet, und einem gegenüberliegenden äußeren Ende (20), das ein Eingabeaußenende (21) bildet, für die Eingabe von geschnittenen Broten (2) in den Vorratsspeicher (9), wobei die Schale oder der Trog (16) mittels einer Achse (18), die an dem Eingabeaußenende (21) vorgesehen ist, gelenkig aufgehängt ist, wodurch mit einer Auf- und Abbewegung des Ausgabeaußenendes (12) dieses Ausgabeaußenende (12) von der Ausgangsposition (PU) in die Freigabeposition (VP) bewegt werden kann.

4. Vorrichtung nach einem der vorhergehenden Ansprüche, **dadurch gekennzeichnet, dass** in dem Ausgabeaußenende (12) ein Rückhaltemittel vorgesehen ist, mit dem das Brot (2), mit Ausnahme der vordersten Scheibe (3), zurückgehalten und wieder freigegeben werden kann.

5. Vorrichtung nach Anspruch 4, **dadurch gekennzeichnet, dass** das Rückhaltemittel durch ein Paar Rückhaltearme (15a, 15b) gebildet ist, die auf beiden Seiten der Ablagefläche (11) vorgesehen sind, und die in horizontaler Richtung aufeinander zu und voneinander weg bewegbar sind, so dass, wenn diese aufeinander zu bewegt werden, mittels dieser ein geschnittenes Brot (2), mit Ausnahme der vordersten Scheibe (3), auf der Ablagefläche (11) gehalten werden kann.

## Revendications

1. - Appareil (1) pour désempiler un pain tranché (2) en tranches séparées (3), comprenant :
un moyen de transport sous la forme d'un disque disposé verticalement (4), qui est apte à tourner autour d'un axe de rotation horizontal, dont une circonférence (5) est pourvue d'au moins un siège de tranche (6), destiné à recevoir une tranche séparée (3), formé par une surface de soutien (7) pour le soutien latéral d'une face latérale (3a) de la tranche (3) et un support (8) sous la forme d'un bord (8) ou d'un rebord (8) qui se relie à angle droit à la surface de soutien (7), pour le soutien d'un bord (3b) de la tranche (3), lequel siège de tranche (6) pendant une rotation du disque (4) peut parcourir un trajet entre un magasin d'approvisionnement (9) pour l'approvisionnement en pains tranchés (2) et un tapis d'évacuation (10) pour l'évacuation de tranches de pain séparées déjà désempilées (3II),
le magasin d'approvisionnement (9) comprenant une surface de placement (11) avec une extrémité extérieure de sortie (12), qui est située sensiblement latéralement par rapport à la circonférence (5), et laquelle extrémité extérieure de sortie (12) est destinée à transporter, depuis l'extérieur, une tranche la plus en avant (3) d'un pain (2) qui est présent sur l'extrémité extérieure de sortie (12), jusque sur le siège de tranche (6),
l'extrémité extérieure de sortie (12) étant apte à être positionnée dans une position de départ (PU), par rapport au siège de tranche (6) de telle sorte que la face latérale (3a) de la tranche la plus en avant (3) qui est dirigée vers la surface de soutien (7) est parallèle au plan (7a) de la surface de soutien (7),
une condition étant présente, au moyen de laquelle le pain (2) qui est présent à l'extrémité extérieure de sortie (12) peut être déplacé ou poussé dans la direction de la surface de soutien (7), de telle sorte que la tranche la plus en avant (3), provenant de l'extérieur de l'extrémité extérieure de sortie (12), se termine ou est poussée sur le siège de tranche (6) avec un bord (3b) reposant sur le support (8) et avec la face latérale (3a) contre la surface de soutien (7),
des moyens étant prévus pour que, pendant une rotation du disque (4), la tranche (31) qui est désempilée et transportée sur le siège de tranche (6) se détache ou se libère d'une tranche la plus en avant, non encore désempilée (3) du pain (2) qui est présent sur l'extrémité extérieure de sortie (12),
**caractérisé par le fait que** les moyens sont formés de telle sorte que l'extrémité extérieure de sortie (12), à partir de la position de départ (PU), est mobile vers le haut dans une position de libération (VP) de telle sorte que, conjointement avec le mouvement vers le haut, un espace (R) est créé entre la face latérale (3a) d'une tranche avant (3) du pain (2) qui est présent sur l'extrémité extérieure de sortie (12), et la face latérale (3b), qui est dirigée vers cette face latérale (3a), de la tranche déjà désempilée (31) transportée sur le support.

2. - Appareil selon la revendication 1, **caractérisé par le fait que** l'extrémité extérieure de sortie (12) est mobile vers le haut à partir de la position de départ (PU) jusqu'à la position de libération (VP) à une vitesse qui est égale à la vitesse de rotation du disque (4) .

3. - Appareil selon la revendication 1 ou 2, **caractérisé par le fait que** la surface de placement (11) a la forme d'un plateau allongé ou d'une auge (16) ayant une extrémité extérieure (19) qui forme une extrémité extérieure de sortie (12) et une extrémité extérieure opposée (20) qui forme une extrémité extérieure d'entrée (21), pour l'entrée dans le magasin d'approvisionnement (9) de pains tranchés (2), lequel plateau ou laquelle auge (16) est suspendu(e) de manière articulée au moyen d'un axe (18) prévu à l'extrémité extérieure d'entrée (21) de telle sorte que, avec un mouvement de haut en bas de l'extrémité extérieure de sortie (12), cette extrémité extérieure de sortie (12) est mobile à partir de la position de départ (PU) jusqu'à la position de libération (VP).

4. - Appareil selon l'une des revendications précédentes, **caractérisé par le fait que** dans l'extrémité extérieure de sortie (12) est prévu un moyen de retenue au moyen duquel le pain (2), à l'exception de la tranche la plus en avant (3), peut être retenu et libéré à nouveau.

5. - Appareil selon la revendication 4, **caractérisé par le fait que** le moyen de retenue est formé par une paire de bras de retenue (15a, 15b) qui sont disposés des deux côtés de la surface de placement (11), qui sont mobiles dans une direction horizontale l'un vers l'autre et à l'opposé l'un de l'autre de telle sorte que, lorsqu'ils sont déplacés l'un vers l'autre, à l'aide de ceux-ci, un pain tranché (2), à l'exception de la tranche la plus en avant (3), peut être retenu sur la surface de placement (11).
